# EUROPÄISCHE PATENTSCHRIFT

(11) **EP 2 588 928 B1**
(45) Veröffentlichungstag und Bekanntmachung des Hinweises auf die Patenterteilung: **24.07.2019**
(21) Anmeldenummer: 11741097.7
(22) Anmeldetag: 28.06.2011
(51) Int. Cl.: G05B 19/042

(54) **KOMMUNIKATIONSSYSTEM ZUM VERBINDEN VON FELDGERÄTEN MIT EINER ÜBERLAGERTEN STEUEREINRICHTUNG**
COMMUNICATION SYSTEM FOR CONNECTING FIELD DEVICES TO AN OVERLAID CONTROL DEVICE
SYSTÈME DE COMMUNICATION PERMETTANT DE RELIER DES APPAREILS DE TERRAIN À UN DISPOSITIF DE COMMANDE SUPERPOSÉ

(30) Priorität: 29.06.2010 DE 102010025515
(43) Veröffentlichungstag der Anmeldung: 08.05.2013
(73) Patentinhaber: Phoenix Contact GmbH & Co. KG, 32825 Blomberg (DE)
(72) Erfinder: WESSLING, Klaus, 31675 Bückeburg (DE)
(74) Vertreter: Blumbach · Zinngrebe Patentanwälte PartG mbB
(86) Internationale Anmeldenummer: PCT/EP2011/003161
(87) Internationale Veröffentlichungsnummer: WO 2012/000641

(56) Entgegenhaltungen:
- EP-A2- 2 042 953
- EP-A2- 2 182 418
- WO-A1-2009/118032
- DE-A1-102004 015 616
- US-A1- 2005 288 799
- IO-LINK CONSORTIUM: "IO-Link Communication Specification, Version 1.0", INTERNET CITATION, 31. Januar 2009 (2009-01-31), Seiten 1-134, XP002593082, Gefunden im Internet: URL:http://www.io-link.com/share/Downloads /IOL-Comm-Spec_10002_V10_090118.pd [gefunden am 2010-07-21]
- Siemens: In: "Basissoftware für S7-300/400 PID Control", 31 December 1996 (1996-12-31), SIEMENS, XP055238366,

## Beschreibung

Die Erfindung betrifft ein Kommunikationssystem zum Verbinden von Feldgeräten, insbesondere Sensoren und Aktoren, mit einer überlagerten Steuereinrichtung. Ferner betrifft die Erfindung eine Anschlusseinrichtung, die zu einem Einsatz in einem solchen Kommunikationssystem geeignet ist.

Um Feldgeräte innerhalb eines Automatisierungssystems in effizienter und kostengünstiger Weise an eine überlagerte Steuereinrichtung, beispielsweise eine SPS (Speicherprogrammierbare Steuerung) anbinden zu können, werden seit geraumer Zeit standardisierte Anschlusssysteme eingesetzt, die als IO-Link-Kommunikationssysteme bekannt sind. Bei dem IO-Link-Kommunikationssystem handelt es sich um ein standardisiertes Punkt-zu-Punkt-Anschlusssystem. IO-Link-Geräte, das sind vornehmlich Sensoren, Aktoren oder Kombinationen hieraus, werden hierbei über separate Punkt-zu-Punkt-Verbindungen mit einem IO-Link-Master verbunden, der wiederum an eine SPS angeschlossen werden kann. Jedes IO-Link-Gerät ist an einem separaten IO-Link-Port des IO-Link-Masters angeschlossen. Je nach Konfiguration fungieren die IO-Link-Ports als digitale Ein- oder Ausgänge. Ferner können IO-Link-Ports derart konfiguriert werden, dass sie eine zyklische Kommunikation zu einem angeschlossenen IO-Link-Gerät aufbauen können. Eine Aufgabe des IO-Link-Masters besteht darin, die an den Ports von den angeschalteten IO-Link-Geräten ankommenden Eingangsprozessdaten zu sammeln und über einen überlagerten Feldbus zur SPS zu übertragen. Die SPS verfügt über spezielle Funktionseinrichtungen, die die empfangenen Eingangsprozessdaten auf Ausgangsprozessdaten abbilden. Diese Ausgangsprozessdaten werden anschließend von der SPS zum IO-Link-Master gesendet. Der IO-Link-Master verteilt die empfangenen Ausgangsprozessdaten auf die entsprechenden IO-Link-Ports, welche dann Ausgangsprozessdaten an die entsprechenden IO-Link-Geräte senden. Dieser Kommunikationszyklus kann jedoch für einige Anwendungen zu lange dauern, bei denen IO-Link-Eingangsprozessdaten schneller auf IO-Link-Ausgangsprozessdaten abgebildet werden müssen.

Bekannte Kommunikationssysteme zum Verbinden von Feldgeräten sind offenbart in US 2005/288799 A1 und DE 10 2004 015616 A1.

Der Erfindung liegt daher die Aufgabe zu Grunde, ein Kommunikationssystem und eine Anschlusseinrichtung zum Verbinden von Feldgeräten mit einer überlagerten Steuereinrichtung bereitzustellen, welche ermöglichen, dass Eingangsprozessdaten schneller auf Ausgangsprozessdaten abgebildet werden können.

Ein Kerngedanke der Erfindung ist darin zu sehen, eine Anschlusseinrichtung vorzusehen, die über ein Übertragungsmedium mit einer überlagerten Steuereinrichtung verbunden sein kann. An der Anschlusseinrichtung können mehrere Feldgeräte angeschlossen sein. Die Anschlusseinrichtung verfügt über Funktionseinrichtungen, welche die von mindestens einem Feldgerät empfangenen Eingangsdaten auf Ausgangsdaten abbildet. Anschließend überträgt die Anschlusseinrichtung die Ausgangsdaten zu einem Ziel-Feldgerät. Da diese Bearbeitungsschritte nun nicht mehr in einer überlagerten Steuereinrichtung, sondern in der Anschlusseinrichtung selbst durchgeführt werden, können kürzere Kommunikationszyklen zum Austausch von Prozessdaten erreicht werden.

Ein weiterer Kerngedanke ist darin zu sehen, dass die Anschlusseinrichtung ein modifizierter IO-Link-Master ist und die Feldgeräte IO-Link-Geräte sind.

Das oben genannte technische Problem wird durch die Merkmale des Anspruchs 1 gelöst.

Demnach ist ein Kommunikationssystem zum Verbinden von Feldgeräten mit einer überlagerten Steuereinrichtung vorgesehen. Das Kommunikationssystem weist eine Anschlusseinrichtung auf, welche über ein Übertragungsmedium mit einer überlagerten Steuereinrichtung verbindbar ist. Die Anschlusseinrichtung verfügt über wenigstens einen ersten Port, an den ein Eingangsdaten erzeugendes Feldgerät angeschlossen ist, sowie wenigstens einen zweiten Port, an welchem ein Ausgangsdaten empfangendes Feldgerät angeschlossen ist. Damit kürzere Kommunikationszyklen erreicht und die überlagerte Steuereinrichtung entlastet werden kann, weist die Anschlusseinrichtung wenigstens eine Funktionseinrichtung auf, die zwischen wenigstens einen ersten und wenigstens einen zwei Port schaltbar ist. Die Funktionseinrichtung ist dazu ausgebildet, unter Ansprechen auf die am ersten Port ankommenden Eingangsdaten Ausgangsdaten, welche für den zweiten Port bestimmt sind, zu erzeugen.

Angemerkt sei an dieser Stelle, dass es sich bei dem Übertragungsmedium um einen überlagerten Feldbus, beispielsweise gemäß dem Ethernet-Standard, handeln kann. Unter Eingangsdaten werden Daten verstanden, die von einem Feldgerät erzeugt und zur Anschlusseinrichtung übertragen werden, also Eingangsdaten für die Anschlusseinrichtung sind. Entsprechend sind Ausgangsdaten Daten, die von der Anschlusseinrichtung zu einem Feldgerät übertragen werden, und somit Ausgangsdaten für die Anschlusseinrichtung darstellen.

Gemäß einer vorteilhaften Ausführungsform bildet das Kommunikationssystem ein modifiziertes IO-Link-Kommunikationssystem, bei welchem die Feldgeräte IO-Link-Geräte, insbesondere Sensoren und Aktoren sind. In diesem Fall kommuniziert die Anschlusseinrichtung über Punkt-zu-Punkt-Verbindungen mit den jeweiligen IO-Link-Geräten gemäß dem IO-Link-Protokoll. Die Anschlusseinrichtung kann bei dieser Ausführungsform auch als modifiziertern IO-Link-Master betrachtet werden.

Um die Einsatzmöglichkeiten für das Kommunikationssystem zu erweitern und dessen Flexibilität zu steigern, weist die Anschlusseinrichtung mehrere unterschiedliche Funktionseinrichtungen sowie eine programmierbare Schalteinrichtung auf. Die Schalteinrichtung ist derart ausgebildet, dass sie wenigstens eine Funktionseinrichtung zwischen wenigstens einen ersten und wenigstens einen zweiten Port schalten kann.

Angemerkt sei an dieser Stelle, dass die Funktionseinrichtungen unterschiedliche logische oder arithmetische Funktionen realisieren können. Denkbar ist zudem, dass die Funktionseinrichtungen auch als Regler, Filter, Einschaltverzögerer oder Ausschaltverzögerer realisiert werden können. Je nach gewünschter Anwendung ist es möglich, mehrere Funktionseinrichtungen in Reihe zu schalten, so dass die an einem Port ankommenden Eingangsdaten einen mehrstufigen Bearbeitungsprozess durchlaufen können, bevor sie an ein Feldgerät ausgeben werden. Auf diese Weise lässt sich durch gezieltes Zusammenschalten mehrerer Funktionseinrichtungen eine gewünschte Gesamtfunktion realisieren.

Gemäß einer vorteilhaften Weiterbildung enthalten die Eingangs- und Ausgangsdaten Prozessdaten, deren Übertragung zyklisch erfolgen kann. Die Eingangs- und Ausgangsdaten werden vorzugsweise in Telegrammen verschickt, welche zudem die Portnummer des entsprechenden ersten Ports bzw. zweiten Ports sowie die Länge des Telegramms oder der Prozessdaten enthalten können. Die Länge kann in Bit oder Byte angegeben werden.

Das oben genannte technische Problem wird ebenfalls durch die Merkmale des Anspruchs 5 gelöst.

Demnach ist eine Anschlusseinrichtung vorgesehen, die insbesondere für den Einsatz in einem Kommunikationssystem zum Verbinden von Feldgeräten mit einer überlagerten Steuereinrichtung geeignet ist. Die Anschlusseinrichtung weist wenigstens einen ersten Port, an den ein Eingangsdaten erzeugendes Feldgerät anschließbar ist, und wenigstens einen zweiten Port, an den ein Ausgangsdaten empfangendes Feldgerät anschließbar ist, auf. Weiterhin ist wenigstens eine Funktionseinrichtung vorgesehen, die zwischen wenigstens einen ersten Port und wenigstens einen zweiten Port schaltbar ist. Die Funktionseinrichtung ist dazu ausgebildet ist, unter Ansprechen auf die am ersten Port ankommenden Eingangsdaten Ausgangsdaten, welche für den zweiten Port bestimmt sind, zu erzeugen.

Die Erfindung wird nachfolgend anhand eines Ausführungsbeispiels in Verbindung mit einer Figur näher erläutert.

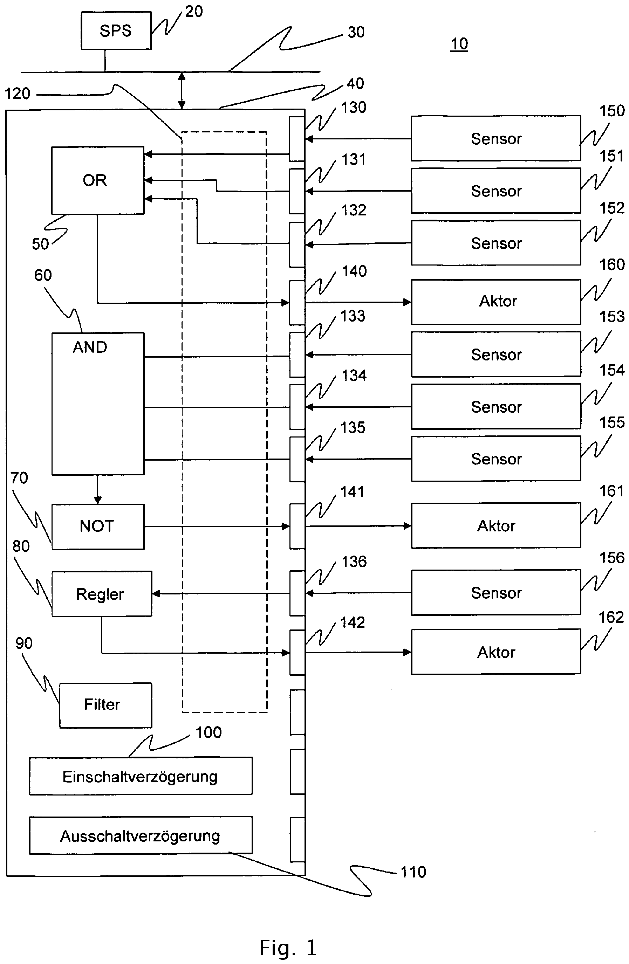

Die Figur zeigt ein Kommunikationssystem 10 zum Beispiel in Form einer Automatisierungsanlage. Das Kommunikationssystem 10 weist eine übergeordnete Steuereinrichtung 20 auf, die an ein Übertragungsmedium 30, beispielsweise einen Feldbus angeschlossen ist. An den Feldbus 30 ist ferner eine Anschlusseinrichtung 40 angeschlossen, die hinsichtlich des gewählten Ausführungsbeispiels auch als IO-Link-Anschlusseinrichtung oder modifizierter IO-Link-Master bezeichnet werden kann. Lediglich der einfacheren Darstellung wegen ist nur eine einzige Anschlusseinrichtung 40 gezeigt. Die Anschlusseinrichtung 40 kann alle Funktionen eines standardisierten IO-Link-Masters enthalten. Um jedoch Prozessdaten in kürzeren Kommunikationszyklen innerhalb des Kommunikationssystems 10 übertragen zu können, weist der modifizierte IO-Link-Master 40 darüber hinaus eine Vielzahl von unterschiedlichen Funktionseinrichtungen 50, 60, 70, 80, 90, 100, 110 auf. Beispielsweise sind die Funktionseinrichtung 50 als ODER-Gatter, die Funktionseinrichtung 60 als UND-Gatter, die Funktionseinrichtung 70 als Inverter, die Funktionseinrichtung 80 als Regler, die Funktionseinrichtung 90 als Filter, die Funktionseinrichtung 100 als Einschaltverzögerung und die Funktionseinrichtung 110 als Ausschaltverzögerung verwirklicht. Darüber hinaus verfügt die Anschlusseinrichtung 40 über mehrere als Eingangsports konfigurierbare Ports 130 bis 136 sowie mehrere als Ausgangsports konfigurierbare Ports 140 bis 142. An jeden Eingangsport ist im vorliegenden Beispiel über eine separate Punkt-zu-Punkt-Verbindung ein Sensor angeschlossen. So sind an den Eingangsport 130 ein Sensor 150, an den Eingangsport 131 ein Sensor 151, an den Eingangsport 132 ein Sensor 152, an den Eingangsport 133 ein Sensor 153, an den Eingangsport 134 ein Sensor 154, an den Eingangsport 135 ein Sensor 155 und an den Eingangsport 136 ein Sensor 156 angeschlossen. In ähnlicher Weise sind bei dem beschriebenen Beispiel an den Ausgangsport 140 ein Aktor 160, an den Ausgangsport 141 ein Aktor 161 und an den Ausgangsport 142 ein Aktor 162 angeschlossen. Die von den Sensoren 150 bis 156 bereitgestellten Daten, welche zur Anschlusseinrichtung 40 übertragen werden, werden als Eingangsdaten bezeichnet, wohingegen die von der Anschlusseinrichtung 40 über die jeweiligen Ausgangsports zu den Aktoren 160 bis 162 übertragenen Daten als Ausgangsdaten bezeichnet werden. Angemerkt sei bereits an dieser Stelle, dass die Eingangsdaten Eingangsprozessdaten und die Ausgangsdaten Ausgangsprozessdaten zur Steuerung der Aktoren enthalten.

Gemäß dem geschilderten Ausführungsbeispiel bilden die Ausgangseinrichtung 40 und die daran angeschlossenen Sensoren und Aktoren ein Anschlusssystem, dass auch als modifiziertes IO-Link-Kommunikationssystem bezeichnet werden kann. Die Sensoren und Aktoren sind hierbei als IO-Link-Geräte realisiert.

Weiterhin verfügt die Anschlusseinrichtung 40 über eine schematisch dargestellte programmierbare Schalt- oder Steuereinrichtung 120. Die Schalteinrichtung 120 hat die Aufgabe, in Abhängigkeit der vorgegebenen Systemimplementierung die an wenigstens einen Eingangsport 130 bis 136 ankommenden Eingangsdaten durch eine oder mehrere Funktionseinrichtungen zu führen, um die gewünschten Ausgangsdaten zu erhalten. Die Ausgangsdaten werden dann einem entsprechenden Ausgangsport, an welchem der Ziel-Aktor angeschlossen ist, zugeführt. Bei der beispielhaften Implementierung der Anschlusseinrichtung 40 sind die Eingangsports 130, 131 und 132 mit der Funktionseinrichtung 50 verbunden. Mit anderen Worten werden die von den Sensoren 150, 151 und 152 kommenden Eingangsprozessdaten in der Funktionseinrichtung 50 gemäß einer ODER-Funktion verknüpft. Die Eingangsprozessdaten werden vorzugsweise in Telegrammen in definierbaren Kommunikationszyklen zur Anschlusseinrichtung 40 übertragen. Die in einem Telegramm enthaltenen Eingangsdaten können neben den erwähnten Eingangsprozessdaten die Portnummer des jeweiligen Eingangsports, einen Bit-Offset und die Länge des Telegramms bzw. die Anzahl der Prozessdaten entweder in der Einheit Bit oder in der Einheit Byte enthalten. So wird in einem vom Sensor 150 bereitgestellten Telegramm die Portnummer des Eingangsports 130, in einem vom Sensor 151 bereitgestellten Telegramm die Portnummer des Eingangsports 131 und in einem vom Sensor 152 bereitgestellten Telegramm die Portnummer des Eingangsports 132 übertragen. Der Eingangsport 130 oder eine andere geeignete Einrichtung liest die im Telegramm empfangenen Eingangsprozessdaten aus und übergibt sie an den Eingang der Funktionseinrichtung 50. Ferner kann der Eingangsport 130 oder eine andere geeignete Einrichtung die im empfangenen Telegramm enthaltene Portnummer des Eingangsports 130 darauf hin prüfen, ob die empfangenen Eingangsprozessdaten auch tatsächlich von der richtigen Quelle, d. i. der Sensor 150, kommen. In ähnlicher Weise werden die von den Sensoren 151 und 152 kommenden Telegramme verarbeitet.

Ausgangsseitig ist die Funktionseinrichtung 50 mit dem Ausgangsport 140 verbunden. Folglich werden die von der Funktionseinrichtung 50 erzeugten Ausgangsprozessdaten dem Ausgangsport 140 zugeführt und von dort in einem Kommunikationszyklus zum Aktor 160 übertragen. Die Ausgangsprozessdaten werden vorzugsweise in Telegrammen in definierbaren Kommunikationszyklen zum Aktor 160 übertragen. Die in einem Telegramm enthaltenen Ausgangsdaten können neben den erwähnten Ausgangsprozessdaten die Portnummer des Ausgangsports 140, einen Bit-Offset und die Länge des Telegramms bzw. die Anzahl der Prozessdaten entweder in der Einheit Bit oder in der Einheit Byte enthalten. Die in einem Telegramm enthaltene Portnummer des Ausgangsports 140 kann vom Aktor 160 darauf hin geprüft werden, ob die empfangenen Ausgangsprozessdaten auch tatsächlich für den Aktor 160 bestimmt sind.

Die Funktionseinrichtung 50 oder eine weitere Einrichtung erzeugen ein abgehendes Telegramm, in welches die Ausgangsprozessdaten der Funktionseinrichtung 50, die Portnummer des Ausgangsports 140 und ein Bit-Offset und gegebenenfalls auch die Länge des Telegramms eingeschrieben werden. Das Ausgangstelegramm wird dann über den Port 140 zum Aktor 160 übertragen, der unter Ansprechen auf die entsprechenden Ausgangsprozessdaten die gewünschte Handlung ausführt.

Weiterhin zeigt die beispielhafte Anschlusseinrichtung, dass die Eingangsports 133, 134 und 135 mittels der Schalteinrichtung 120 mit der Funktionseinrichtung 60 verbunden sind, die Eingangsdaten der Sensoren 153, 154 und 155 gemäß einer UND-Verknüpfung verarbeitet. Bei dem dargestellten Beispiel sind die Funktionseinrichtungen 60 und 70 in Reihe geschaltet. Demzufolge werden die Ausgangsdaten der Funktionseinrichtung 60 der Funktionseinrichtung 70 zugeführt, welche die von der Funktionseinrichtung 60 empfangenen Daten invertiert. Die Schalteinrichtung 120 sorgt demnach dafür, dass die an den Eingangsports 133, 134, 135 ankommenden Eingangsdaten zweistufig bearbeitet werden, nämlich zunächst in der Funktionseinrichtung 60 und anschließend in der Funktionseinrichtung 70. Die Funktionseinrichtung 70 ist mittels der Schalteinrichtung 120 mit dem Ausgangsport 141 verbunden. Damit ist sichergestellt, dass die Ausgangsprozessdaten von der Funktionseinrichtung 70 über den Ausgangsport 141 zum Ziel-Aktor 161 übertragen werden.

Gemäß einer beispielhaften Implementierung sorgt die Schalteinrichtung 120 weiter dafür, dass die am Eingangsport 136 vom Sensor 156 ankommenden Eingangsdaten durch den Regler 80 laufen und als entsprechende Ausgangsdaten über den Ausgangsport 142 als Ausgangsdaten zum Aktor 162 übertragen werden. In ähnlicher Weise können die übrigen Funktionseinrichtzungen 90 bis 110 über die Schalteinrichtung 120 zwischen entsprechende Eingangs- und Ausgangsports geschaltet werden.

Angemerkt sei an dieser Stelle, dass weitere Funktionseinrichtungen den dargestellten beispielhaften Funktionseinrichtungen 50 bis 110 hinzugefügt werden können. Je nach Konfigurierung der Schalteinrichtung 120 können ein oder mehrere Funktionseinrichtungen zusammengeschaltet und zwischen ausgewählten Eingangs- und Ausgangsport zwischengeschaltet werden, um empfangene Eingangsprozessdaten gemäß einer vorbestimmten Gesamtfunktion auf Ausgangsprozessdaten abzubilden.

Die Konfiguration der Anschlusseinrichtung 40 hinsichtlich der Verbindung der Eingangsports mit Ausgangsports und der entsprechenden Zwischenschaltung von Funktionseinrichtungen kann beispielsweise über die überlagerte Steuereinrichtung 20 oder eine andere externe Einrichtung erfolgen. Die Konfigurationsparameter, wie zum Beispiel die Portnummer der jeweiligen Eingangs- und Ausgangsports und eine Identifikation der zwischenzuschaltenden Funktionseinrichtungen, können in Form einer Nachschlagetabelle in der Anschlusseinrichtung 40 hinterlegt werden. Die Schalteinrichtung 120 kann auf die Nachschlagetabelle zugreifen kann, um die entsprechenden Verbindungen herzustellen.

Dank der Erfindung ist es möglich, Ausgangsprozessdaten schneller zu einem Ziel-Aktor zu übertragen. Denn die von den Sensoren bereitgestellten Eingangsprozessdaten müssen nun nicht mehr über die Anschlusseinrichtung 40 zur überlagerten Steuereinrichtung 20 übertragen und dort auf Ausgangsprozessdaten abgebildet werden. Vielmehr werden die Eingangsprozessdaten direkt in der Anschlusseinrichtung 40 selbst bearbeitet und dann als Ausgangsprozessdaten zu einem Ziel-Aktor zyklisch übertragen.

Allerdings können die Eingangs- und Ausgangsprozessdaten nach wie vor von der überlagerten Steuereinrichtung 20 überwacht und beobachtet werden. Weiterhin kann die überlagerte Steuereinrichtung in herkömmlicher Weise mit den Feldgeräten azyklisch kommunizieren, wie dies zum Beispiel in einem Diagnose- oder Fehlerfall notwendig ist.

## Patentansprüche

1. Kommunikationssystem (20) zum Verbinden von Feldgeräten (150-156, 160-162) mit einer überlagerten Steuereinrichtung (20), mit
einer Anschlusseinrichtung (40), welche über ein Übertragungsmedium (30) mit einer überlagerten Steuereinrichtung (20) verbindbar ist, wobei die Anschlusseinrichtung (40) wenigstens einen ersten Port (130-136), an den ein Eingangsdaten erzeugendes Feldgerät (150-156) angeschlossen ist, und wenigstens einen zweiten Port (140-142), an den ein Ausgangsdaten empfangendes Feldgerät (160-1629 angeschlossen ist, aufweist,
**dadurch gekennzeichnet, dass**
die Anschlusseinrichtung (40) mehrere verschiedene Funktionseinrichtungen (50-110) sowie eine programmierbare Schalteinrichtung (120) aufweist,
wobei die Schalteinrichtung (120) derart ausgebildet ist, dass sie wenigstens eine Funktionseinrichtung (60-70) zwischen den wenigstens einen ersten Port (136) und den wenigstens einen zweiten Port (142) schalten kann, wobei die wenigstens eine Funktionseinrichtung (80) dazu ausgebildet ist, unter Ansprechen auf die am ersten Port (136) ankommenden Eingangsdaten Ausgangsdaten, welche für den zweiten Port (142) bestimmt sind, zu erzeugen.

2. Kommunikationssystem nach Anspruch 1,
**dadurch gekennzeichnet, dass**
die Feldgeräte IO-Link-Geräte, insbesondere Sensoren oder Aktoren sind, und dass
die Anschlusseinrichtung (40) über Punkt-zu-Punkt-Verbindungen mit den jeweiligen IO-Link-Geräten gemäß dem IO-Link-Protokoll kommuniziert.

3. Kommunikationssystem nach einem der vorstehenden Ansprüche,
**dadurch gekennzeichnet, dass**
die Eingangs- und Ausgangsdaten Prozessdaten enthalten, deren Übertragung zyklisch erfolgt.

4. Kommunikationssystem nach einem der vorstehenden Ansprüche,
**dadurch gekennzeichnet, dass**
die an einem ersten Port (130-136) ankommenden Eingangsdaten die Portnummer des jeweiligen ersten Ports enthalten und dass die an einem zweiten Port (140-142) abgehenden Ausgangsdaten die Portnummer des jeweiligen zweiten Ports enthalten.

5. Anschlusseinrichtung (40), für ein Kommunikationssystem (20) zum Verbinden von Feldgeräten (150-156, 160-162) mit einer überlagerten Steuereinrichtung (20), wobei die Anschlusseinrichtung (40) über ein Übertragungsmedium (30) mit einer überlagerten Steuereinrichtung (20) verbindbar ist und wenigstens einen ersten Port (130-136), an den ein Eingangsdaten erzeugendes Feldgerät (150-156) anschließbar ist, und wenigstens einen zweiten Port (140-142), an den ein Ausgangsdaten empfangendes Feldgerät (160-162) anschließbar ist, aufweist, **gekennzeichnet durch**
mehrere unterschiedliche Funktionseinrichtungen (50-110) sowie eine programmierbare Schalteinrichtung (120), wobei die Schalteinrichtung (120) derart ausgebildet ist, dass sie wenigstens eine Funktionseinrichtung (60-70) zwischen den wenigstens einen ersten Port (136) und den wenigstens einen zweiten Port (142) schalten kann, wobei die wenigstens eine Funktionseinrichtung (80) dazu ausgebildet ist, unter Ansprechen auf die am ersten Port (136) ankommenden Eingangsdaten Ausgangsdaten, welche für den zweiten Port (142) bestimmt sind, zu erzeugen.

## Claims

1. A communication system (10) for connecting field devices (150 - 156, 160 - 162) to a higher-level control device (20), comprising
a connection device (40) which is connectable to a higher-level control device (20) via a transmission medium (30), wherein the connection device (40) has at least one first port (130 - 136) to which an input data generating field device (150 - 156) is connected, and at least one second port (140 - 142) to which an output data receiving field device (160 - 162) is connected; **characterized in that**
the connection device (40) comprises a plurality of different functional devices (50 - 110) and a programmable switching device (120), wherein the switching device (120) is adapted to be able to connect at least one functional device (60 - 70) between the at least one first port (136) and the at least one second port (142);
wherein the at least one functional device (80) is adapted to be responsive to the input data arriving at the first port (136) by generating output data which are intended for the second port (142).

2. The communication system according to claim 1 **characterized in that**
the field devices are IO-Link devices, in particular sensors or actuators; and that
the connection device (40) communicates with the respective IO-Link devices in accordance with the IO Link protocol via point-to-point connections.

3. The communication system according to any one of the preceding claims, **characterized in that** the input data and output data contain process data which are transmitted cyclically.

4. The communication system according to any one of the preceding claims, **characterized in that** the input data arriving at a first port (130 - 136) include the port number of the respective first port; and that the output data outgoing at a second port (140 - 142) include the port number of the respective second port.

5. A connection device (40) for a communication system (20) for connecting field devices (150 - 156, 160 - 162) to a higher-level control device (20), wherein the connection device (40) is connectable to a higher-level control device (20) via a transmission medium (30) and has at least one first port (130 - 136), to which an input data generating field device (150 - 156) is connectable, and at least one second port (140 - 142) to which an output data receiving field device (160 - 162) is connectable; **characterized by**
a plurality of different functional devices (50 - 110) and a programmable switching device (120), wherein the switching device (120) is adapted to be able to connect at least one functional device (60 - 70) between the at least one first port (136) and the at least one second port (142), wherein the at least one functional device (80) is adapted to be responsive to the input data arriving at the first port (136) by generating output data which are intended for the second port (142).

## Revendications

1. Système de communication (20) destiné à relier des appareils de terrain (150-156, 160-162) à un dispositif de commande (20) superposé, pourvu
d'un dispositif de raccordement (40), lequel peut être relié à un dispositif de commande (20) superposé par l'intermédiaire d'un moyen de transmission (30), où le dispositif de raccordement (40) présente au moins un premier port (130-136) auquel est raccordé un appareil de terrain (150-156) générant des données d'entrée, et au moins un deuxième port (140-142) auquel est raccordé un appareil de terrain (160-162) recevant des données de sortie,
**caractérisé en ce que**
le dispositif de raccordement (40) présente plusieurs dispositifs fonctionnels (50-110) différents ainsi qu'un dispositif de commutation (120) programmable, dans lequel le dispositif de commutation (120) est conçu de telle sorte qu'il peut commuter au moins un dispositif fonctionnel (60-70) entre l'au moins un premier port (136) et l'au moins un deuxième port (142), dans lequel l'au moins un dispositif fonctionnel (80) est conçu pour générer des données de sortie destinées au deuxième port (142) en réponse aux données d'entrée arrivant au premier port (136).

2. Système de communication selon la revendication 1, **caractérisé en ce que** :
les appareils de terrain sont des appareils IO-Link, en particulier des capteurs ou des actionneurs, et **en ce que**
le dispositif de raccordement (40) communique avec les appareils IO-Link respectifs selon le protocole IO-Link par l'intermédiaire de liaisons point à point.

3. Système de communication selon l'une quelconque des revendications précédentes, **caractérisé en ce que** les données d'entrée et de sortie contiennent des données de processus dont la transmission s'effectue de manière cyclique.

4. Système de communication selon l'une quelconque des revendications précédentes, **caractérisé en ce que** les données d'entrée arrivant à un premier port (130-136) contiennent le numéro de port du premier port respectif et **en ce que** les données de sortie sortant par un deuxième port (140-142) contiennent le numéro de port du deuxième port respectif.

5. Dispositif de raccordement (40), pour un système de communication (20) destiné à relier des appareils de terrain (150-156, 160-162) à un dispositif de commande (20) superposé, où le dispositif de raccordement (40) peut être relié à un dispositif de commande (20) superposé par l'intermédiaire d'un moyen de transmission (30) et présente au moins un premier port (130-136), auquel un appareil de terrain (150-156) générant des données d'entrée peut être raccordé, et au moins un deuxième port (140-142), auquel un appareil de terrain (160-162) recevant des données de sortie peut être raccordé,
**caractérisé par**
plusieurs dispositifs fonctionnels (50-110) différents ainsi qu'un dispositif de commutation (120) programmable, dans lequel le dispositif de commutation (120) est conçu de telle sorte qu'il peut commuter au moins un dispositif fonctionnel (60-70) entre l'au moins un premier port (136) et l'au moins un deuxième port (142), dans lequel l'au moins un dispositif fonctionnel (80) est conçu pour générer des données de sortie destinées au deuxième port (142) en réponse aux données d'entrée arrivant au premier port (136) .
